# EUROPEAN PATENT APPLICATION

(11) **EP 4 187 506 A1**
(43) Date of publication of application: **31.05.2023**
(21) Application number: 21213105.6
(22) Date of filing: 08.12.2021
(51) Int. Cl.: G06V 40/40, G06V 10/82

(54) **METHOD AND DEVICE FOR DETERMINING FACE LIVENESS**

(30) Priority: 30.11.2021 KR 20210168109
(71) Applicant: Fullstack Inc., Seoul 07325 (KR)
(72) Inventor: LEE, Wonkyu, 06006 Gangnam-gu (KR); CHOO, Jaegul, 13528 Gyeonggi-do (KR); SON, Sungho, 05229 Gangdong-gu (KR); KIM, Dongjun, 16707 Gyeonggi-do (KR)
(74) Representative: Schmitt-Nilson Schraud Waibel Wohlfrom Patentanwälte Partnerschaft mbB

(57) **Abstract**

Disclosed is a method for determining face liveness which includes obtaining a first image being an image associated with a face; generating training data by processing the first image; training an artificial intelligence model by using the training data; extracting a feature vector of a second image by inputting the second image associated with a face to the artificial intelligence model; inputting the feature vector to a fully connected layer; and outputting a liveness result value about second image through the fully connected layer.

## Description

### [TECHNICAL FIELD]

Embodiments of the inventive concept relate a method and a device for determining face liveness, and more particularly, relate to a method for determining face liveness by using a fully connected layer.

### [BACKGROUND ART]

Nowadays, a security technology that is based on a face recognition function of an electronic device is being actively developed. A user may authenticate oneself by comparing stored face information with information about a recognized face through the electronic device equipped with the face recognition function.

The identity authentication is an important technology closely related to security, and the accuracy of the identify authentication is very important. Recently, a liveness detection technology that intelligently detects whether a face targeted for comparison is a face of a real person or a face of a digitally manipulated person is emerging.

The inventive concept was developed in the task of non-face-to-face identify authentication technology development (IC210001, contribution rate 1/1) through the liveness measurement based on artificial intelligence learning of the '4th Seoul Innovation Challenge (Final)' among industry-academia-research cooperation projects in Seoul in 2021. Meanwhile, in all the aspects of the inventive concept, there is no property interest of the Seoul Metropolitan Government.

### [DETAILED DESCRIPTION OF THE INVENTION]

### [TECHINICAL PROBLEM]

Embodiments of the inventive concept provide a method for determining face liveness by using a fully connected layer.

### [TECHNICAL SOLUTION]

According to an embodiment, a method for determining face liveness may include obtaining a first image being an image associated with a face, processing the first image to generate training data, training an artificial intelligence model by using the training data, inputting a second image being an image associated with a face to the artificial intelligence model to extract a feature vector of the second image, inputting the feature vector to a fully connected layer, and outputting a liveness result value associated with the second image through the fully connected layer.

Herein, the fully connected layer may include one or more sub-layers, and the sub-layer may include a plurality of perceptrons using a weight and a bias.

Herein, the training data may include one or more processing images obtained through rotation, enlargement, horizontal movement, vertical movement, tilting, or horizontal flipping of the first image.

Herein, the training data may include a first processing image being an image obtained by rotating the first image as much as 20 degrees.

Herein, the training data may include a second processing image being an image obtained by enlarging the first image as much as 1.15 times.

Herein, the training data may include a third processing image being an image obtained by moving the first image horizontally or vertically as much as a 0.2 ratio.

Herein, the training data may include a fourth processing image being an image obtained by tilting the first image as much as 0.15 degrees.

Herein, the training data may include a fifth processing image being an image obtained by flipping the first image horizontally.

Herein, the outputting of the liveness result value may include inputting the feature vector being M-dimensional to a first sub-layer, and obtaining a first result vector of an N-dimension smaller than the M-dimension through the first sub-layer.

Herein, the first sub-layer may include a first perceptron that transforms a first input value included in the feature vector into a first result value of the first result vector, the first perceptron using a first weight, and a second perceptron transforms a second input value included in the feature vector into a second result value of the first result vector, the second perceptron using a second weight different from the first weight.

According to an embodiment, a face liveness determining device may include a processor that obtains a first image being an image associated with a face, generates training data by using the first image, trains an artificial intelligence model by using the training data, inputs a second image being an image associated with a face to the artificial intelligence model to extract a feature vector of the second image, inputs the feature vector to a fully connected layer, and outputs a liveness result value associated with the second image through the fully connected layer.

### [ ADVANTAGEOUS EFFECTS OF THE INVENTION]

According to an embodiment of the inventive concept, a method for determining face liveness by using a fully connected layer may be provided.

### [ DESCRIPTION OF THE DRAWINGS]

FIG. 1 is a flowchart of a face liveness determining method according to an embodiment.
FIG. 2 is a diagram for describing a face liveness determining method according to an embodiment.
FIG. 3 is a flowchart of a training data generating method according to an embodiment.
FIG. 4 is a diagram for describing a training data generating method according to an embodiment.
FIG. 5 is a flowchart of a method for outputting a liveness result value, according to an embodiment.
FIGS. 6 and 7 are diagrams for describing a method for outputting a liveness result value, according to an embodiment.
FIGS. 8A and 8B are graphs for comparing performance before and after data augmentation.

### [ BEST MODE]

Embodiments described in the specification are for clearly explaining the spirit of the inventive concept to one skilled in the art to which the inventive concept pertains, so the inventive concept is not limited to the embodiments described in the specification. The scope of the inventive concept should be construed to include various modifications, equivalents, and/or alternatives of the embodiments without departing from the spirit of the inventive concept.

The terms used in the specification may be selected as widely used general terms as possible in consideration of functions in the inventive concept but may vary depending on the intention of one skilled in the art to which the inventive concept belongs, precedent, or emergence of new technologies. However, when a specific term is defined and used with an arbitrary meaning, the meaning of the term will be separately described. Hence, the terms used in the specification should be interpreted based on the actual meanings of the terms and the contents throughout the specification, rather than the simple names of the terms.

Drawings attached to the specification are for easily explaining the inventive concept, and because the shapes shown in the drawings may be exaggerated as necessary for better understanding of the inventive concept, the inventive concept is not limited by the drawings.

In the specification, when it is determined that a detailed description of a known configuration or function related to the inventive concept may obscure the gist of the inventive concept, the detailed description thereof will be omitted if necessary.

The inventive concept relates to a method and a device for determining face liveness. The face liveness may relate to face recognition. In detail, liveness determination may be to determine a result value of "Real" or "Fake" by comparing and/or verifying a face registered in advance in an electronic device and a face photographed directly.

The subject that determines the face liveness of the inventive concept may be a processor in the electronic device or a controller of a server. Although the subject is omitted below, it may be understood that a face liveness determining method of the inventive concept is performed by a processor or a controller present in an electronic device.

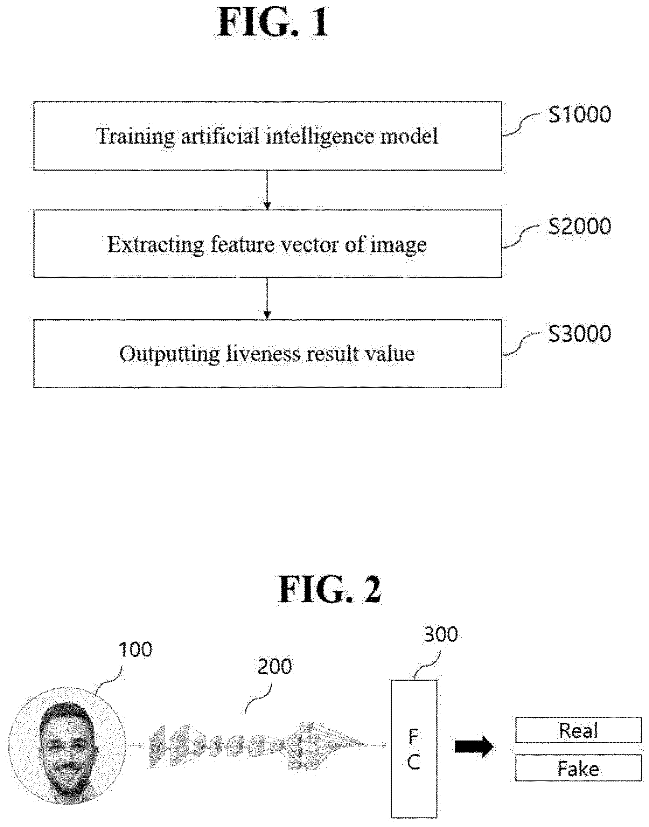

FIG. 1 is a flowchart of a face liveness determining method according to an embodiment. FIG. 2 is a diagram for describing a face liveness determining method according to an embodiment. The face liveness determining method according to an embodiment of the inventive concept will be described with reference to FIGS. 1 and 2.

Referring to FIG. 1, the face liveness determining method according to an embodiment may include training an artificial intelligence model (S1000), extracting a feature vector of an image (S2000), and outputting a liveness result value (S3000).

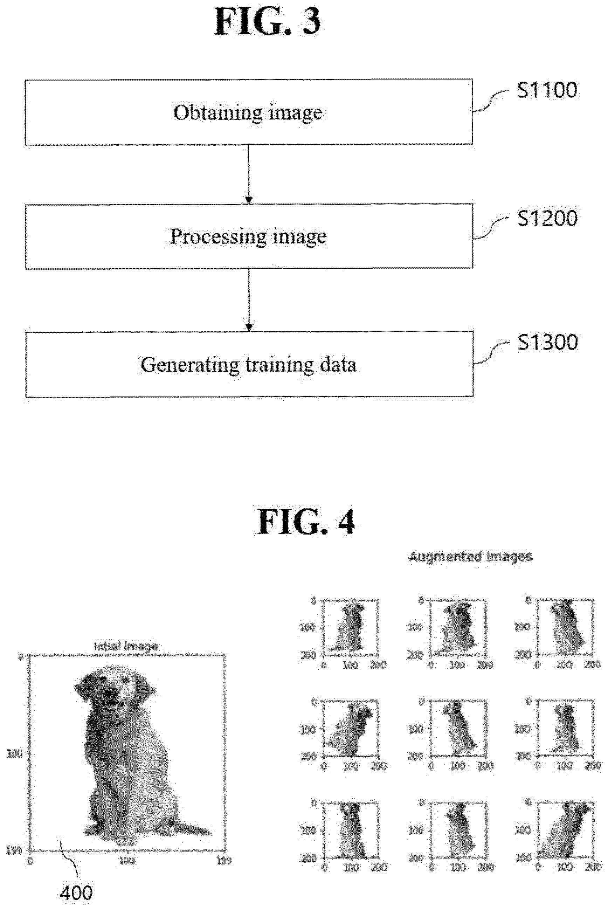

The training of the artificial intelligence model (S1000) may include training the artificial intelligence model associated with extracting a feature(s) of a face by using training data. The training data may be generated by a specific image. In detail, the processor may generate the training data by processing the specific image through various techniques. A method for generating training data will be described with reference to FIGS. 3 and 4.

The extracting of the feature vector of the image (S2000) may include extracting a feature vector of an image that is targeted for liveness determination through the trained artificial intelligence model. In detail, an M-dimensional feature vector of an image may be extracted by inputting the image, which is targeted for liveness determination, to the artificial intelligence model trained in operation S1000.

Referring to FIG. 2, operation S2000 may correspond to an operation in which the processor inputs an image 100 to an artificial intelligence model 200. The artificial intelligence model 200 may extract a feature vector of the image 100.

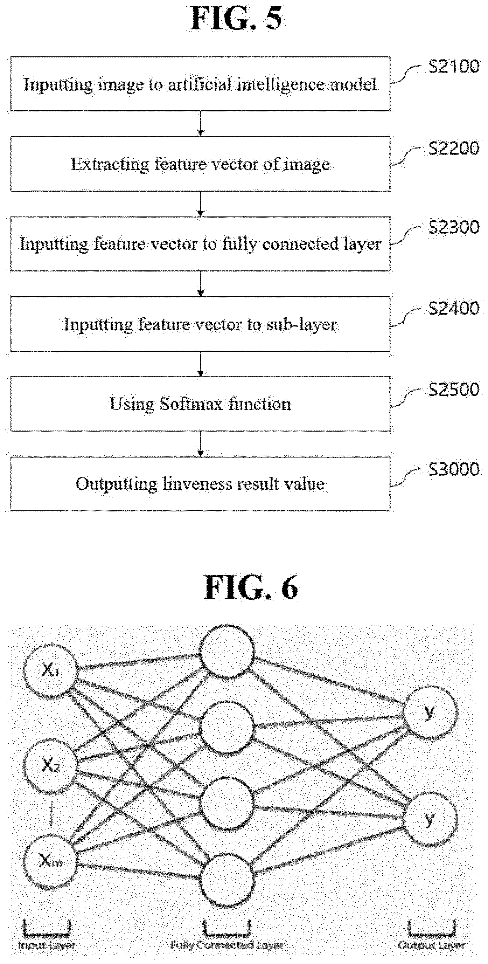

Operation S3000 of outputting the liveness result value may include determining whether an image is real or fake, by using the feature vector extracted in operation S2000. In detail, the processor may input the feature vector to a fully connected layer such that a dimension of the feature vector is reduced and may extract a liveness result value of the image. Operation S2000 and operation S3000 will be described with reference to FIGS. 5 to 7.

Referring to FIG. 2, operation S3000 may correspond to an operation in which the processor inputs the feature vector extracted by the artificial intelligence model 200 to a fully connected layer 300. The fully connected layer 300 may determine whether the image 100 is real or fake, based on the feature vector.

FIG. 3 is a flowchart of a training data generating method according to an embodiment. FIG. 4 is a diagram for describing a training data generating method according to an embodiment. The training data generating method according to an embodiment of the inventive concept will be described with reference to FIGS. 3 and 4.

Referring to FIG. 3, the training data generating method according to an embodiment may include obtaining an image (S1100), processing the image (S1200), and generating training data (S1300).

Operation S1100 of obtaining the image may include obtaining a target image that is used to train the artificial intelligence model 200. Referring to FIG. 4, the processor may obtain an initial image 400 on the left of drawing.

In operation S1100, the processor may obtain an image from an external device or may fetch an image stored in internal storage. The image that the processor obtains may be an image associated with a face. The image may be a photograph of the upper body centered on the face.

Also, the processor may obtain an image centered on the face. In this case, the processor may capture the image to generate a plurality of images. For example, in the case where the processor obtains an image, the processor may capture face images of various angles from the image.

Operation S1200 of processing the image may include augmenting data by pre-processing the image obtained in operation S1100 or processing the image such that attributes thereof are changed. Operation S1300 of generating the training data may include generating the training data including the image processed in operation S1200. That is, through operation S1200 and operation S1300, the processor may process an image and may include the processed image in training data.

In detail, the processor may remove a background in the obtained image, may adjust a size of the image, or may crop the image with respect to a face. Also, the processor may change attributes of the obtained image. In detail, the processor may change the attributes of the image by rotating the image, enlarging the image, moving the image horizontally, moving the image vertically, tilting the image, or flipping the image horizontally.

For example, the processor may generate a processing image by rotating an image in a clockwise or counterclockwise direction. In detail, the processor may rotate the image in the clockwise or counterclockwise direction as much as 20 degrees. The rotation angle of 20 degrees may be an optimal numerical value for the learning of the artificial intelligence model 200. However, the rotation angle is not limited to the numerical value.

Also, for example, the processor may generate the processing image by enlarging or reducing the image. In detail, the processor may enlarge the image 1.15 times. The enlargement ratio of 1.15 times may be an optimal numerical value for the learning of the artificial intelligence model 200. However, the enlargement ratio is not limited to the numerical value.

Also, for example, the processor may generate the processing image by moving the image horizontally or vertically. In detail, the processor may move the image horizontally or vertically as much as a 0.2 ratio. In detail, the processor may move the image left, right, up, or down as much as a threshold value of 0.2. The 0.2 ratio may be an optimal numerical value for the learning of the artificial intelligence model 200. However, the movement ratio is not limited to the numerical value.

Also, for example, the processor may generate the processing image by tilting the image. In detail, the processor may tilt the image as much as 0.15 degrees. The tilt angle of 0.15 degrees may be an optimal numerical value for the learning of the artificial intelligence model 200. However, the tilt angle is not limited to the numerical value.

Also, for example, the processor may generate the processing image by flipping the image horizontally.

Also, the processor may generate the processing image by performing two or more of the rotation, enlargement, horizontal movement, vertical movement, tilting, and horizontal flipping described above on the image.

For example, the processor may generate the processing image by moving the image horizontally as much as a 0.2 ratio and then titling the horizontally moved image as much as an angle of 0.15. Also, for example, the processor may generate the processing image by rotating the image as much as 20 degrees and flipping the rotated image horizontally.

Referring to FIG. 4, the processor may process the initial image 400 obtained in operation S1100 and may generate nine processing images on the right of drawing. The inventive concept is not limited to the rotation, enlargement, horizontal movement, vertical movement, tilting, and horizontal flipping described above as an example, and the processor may generate the processing image by changing various attributes of the image, such as a resolution.

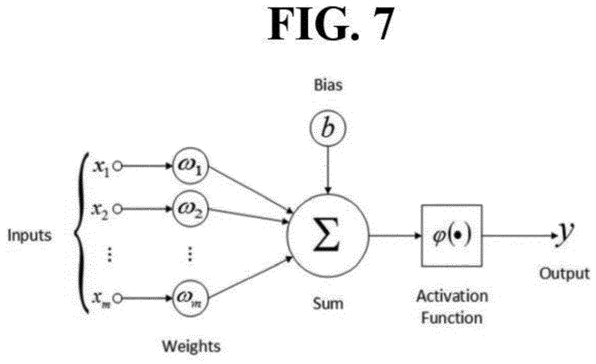

FIG. 5 is a flowchart of a method for outputting a liveness result value, according to an embodiment. FIGS. 6 and 7 are diagrams for describing a method for outputting a liveness result value, according to an embodiment.

Referring to FIG. 5, according to an embodiment, a method for outputting a liveness result value may include inputting an image to an artificial intelligence model (S2100), extracting a feature vector of the image (S2200), inputting the feature vector to a fully connected layer (S2300), inputting the feature vector to a sub-layer (S2400), using a Softmax function (S2500) to output a liveness result value (S3000).

Operation S2100 of inputting the image to the artificial intelligence model 200 may include inputting, at the processor, an image being a liveness determination target to the trained artificial intelligence model 200. In this case, the image being the determination target may be different from or identical to the image obtained in operation S1100 to train the artificial intelligence model 200, in general.

The trained artificial intelligence model 200 may extract a feature vector of the input image (S2200). In this case, the artificial intelligence model 200 may be an artificial intelligence model that is specialized to extract a feature vector of an image including a face. For example, the artificial intelligence model 200 may be Denesenet, ResNet50, VGGFace, Facenet, or ArcFace, but is not limited thereto.

The feature vector extracted through the artificial intelligence model 200 in operation S2200 may be M-dimensional. Referring to FIGS. 6 and 7, the M-dimensional feature vector may include M input values. As illustrated in drawing, the M-dimensional feature vector Input Layer may include a first input value X1 to an M-th input value XM.

Operation S2300 of inputting the feature vector to the fully connected layer may include inputting, at the processor, the feature vector extracted from the image 100 to the fully connected layer 300 (refer to FIG. 2).

Through the fully connected layer 300, all values included in one layer included therein may be connected with all values of a next layer. The fully connected layer 300 may include one or more sub-layers. The number of sub-layers included in the fully connected layer 300 may vary depending on the purpose to use the fully connected layer 300, the specifications, or the like.

Operation S2300 of inputting the feature vector to the fully connected layer may include inputting the feature vector to a sub-layer included in the fully connected layer 300 (S2400).

The sub-layer included in the fully connected layer 300 may include a plurality of perceptrons. The perceptron may draw a result value associated with a received input value by using a weight and a bias.

Referring to FIG. 7, the sub-layer included in the fully connected layer 300 may include a first perceptron to an M-th perceptron. The processor may input input values included in the feature vector to the plurality of perceptrons, respectively. For example, a first input value X1 included in the feature vector may be input to a first perceptron.

In this case, the plurality of perceptrons may use a plurality of weights. For example, the first perceptron may use a first weight w1, and the second perceptron may use a second weight w2.

Each of the plurality of perceptrons may multiply each weight and each input value together. For example, the first perceptron may multiply the first input value X1 input thereto and the first weight w1 together, and the second perceptron may multiply the second input value X2 input thereto and the second weight w1 together. In this case, the first weight w1 and the second weight w2 may be different. Also, weights that the plurality of perceptrons use respectively may be different.

The sub-layer may add all the multiplication values of the input values and weights obtained through the plurality of perceptrons. For example, the sub-layer may add all multiplication values of X1*w1 to XM*wM. The sub-layer may multiply a bias "b" and a result value obtained by adding all the multiplication values together. Accordingly, the sub-layer may calculate a final output "y" by using an activation function.

The bias "b" and the plurality of weights w1 to wM may be values drawn through the trained artificial intelligence model. The trained artificial intelligence model that is different from the artificial intelligence model 200 in operation S2100 may be a model that is trained such that a loss function is "0",

In the case where the fully connected layer 300 includes a plurality of sub-layers, a result value of one sub-layer may be provided as an input value of another sub-layer, and thus, the fully connected layer 300 may continuously calculate an output. In this case, the fully connected layer 300 may reduce a dimension of the output through a sub-layer included therein. In detail, the processor may reduce the dimension of the output by adjusting a dimension of a matrix of weights to be multiplied by input values through the plurality of perceptrons.

For example, a first sub-layer included in the fully connected layer 300 may receive an M-dimensional feature vector and may calculate a first result vector of an N-dimension smaller than the M-dimension, through the calculation using the plurality of perceptrons. Also, a second sub-layer being a next layer of the first sub-layer may receive the first result vector and may calculate a second result vector of an K-dimension smaller than the N-dimension, through the calculation using the plurality of perceptrons.

For example, the processor may calculate a first result vector being 512-dimensional from the 1024-dimensional feature vector by using the first sub-layer and may calculate a second result vector being 256-dimensional from the first result vector by using the second sub-layer. However, the processor may finally calculate a two-dimensional result vector through one sub-layer without using a plurality of sub-layers.

Operation S2500 of using the Softmax function may include inputting, at the processor, a result vector of the last sub-layer included in the fully connected layer 300 to a Softmax layer. Softmax may be a function that normalizes input values and makes the sum of output values equal to 1.

By reducing a dimension of the result vector to a 2-dimension, in operation S3000, the processor may output a function associated with each of truth and false about face liveness, by using the Softmax function in operation S2500. In this case, the processor may use the Softmax function after calculating the two-dimensional result vector through the sub-layer configuration of the fully connected layer 300 or may calculate the K-dimensional result vector two-dimensionally by using the Softmax.

The result in operation S2500 may be a two-dimensional vector, and the two-dimensional vector may include the probability that the liveness of the image in operation S2100 is true and the probability that it is false. For example, the two-dimensional vector may have a result value of (0.98, 0.02). According to the Softmax function, the sum of values included in the two-dimensional vector may always be 1.

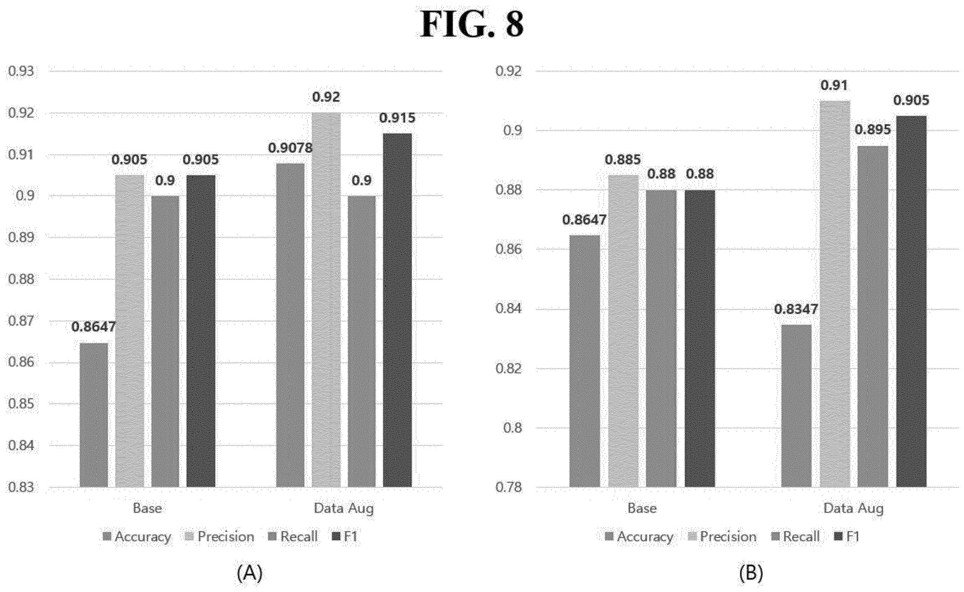

FIGS. 8A and 8B are graphs for comparing performance before and after data augmentation. FIG. 8A is a performance graph when the Densenet model is used, and FIG. 8B is a performance graph when the ResNet50 model is used.

Referring to the left graph of FIG. 8A, when the Densenet model is used, with regard to the case Base where the data augmentation is not performed, the accuracy is 0.8647, the precision is 0.905, the recall is 0.9, and the F1 score is 0.905. When the data augmentation is performed, the corresponding performance may increase.

Referring to the right graph of FIG. 8A, when the Densenet model is used, with regard to the case Data Aug where the data augmentation is performed, the accuracy is 0.9078, the precision is 0.92, the recall is 0.9, and the F1 score is 0.915. Accordingly, it may be understood that the performance of the artificial intelligence model is improved when the data augmentation is performed.

An effect according to the data augmentation is not limited to the Densenet model, and may be obtained even in the case where any other model is used. Referring to the left graph of FIG. 8B, when the ResNet50 model is used, with regard to the case Base where the data augmentation is not performed, the accuracy is 0.8647, the precision is 0.885, the recall is 0.88, and the F1 score is 0.88.

Referring to the right graph of FIG. 8B, when the ResNet50 model is used, with regard to the case Data Aug where the data augmentation is performed, the accuracy is 0.8347, the precision is 0.91, the recall is 0.895, and the F1 score is 0.905. It may be understood that the whole performance of the artificial intelligence model is improved although the loss occurs in the accuracy.

The method according to an embodiment may be implemented in the form of a program instruction and may be recorded in a computer-readable recording medium. The computer-readable storage medium may also include program instructions, data files, data structures, or a combination thereof. The program instructions recorded in the medium may be designed and configured specially for the embodiment or may be known and available to those skilled in computer software. The computer-readable storage medium may include a hardware device, which is specially configured to store and execute program instructions, such as magnetic media (e.g., a hard disk drive and a magnetic tape), optical media (e.g., CD-ROM and DVD), magneto-optical media (e.g., a floptical disk), a read only memory (ROM), a random access memory (RAM), or a flash memory. Examples of program instructions include not only machine language codes created by a compiler, but also high-level language codes that are capable of being executed by a computer by using an interpreter or the like. The hardware device described above may be configured to act as one or more software modules to perform the operation of the embodiment, or vice versa.

While embodiments have been shown and described with reference to the accompanying drawings, it will be apparent to those skilled in the art that various modifications and variations can be made from the foregoing descriptions. For example, adequate effects may be achieved even if the foregoing processes and methods are carried out in different order than described above, and/or the aforementioned elements, such as systems, structures, devices, or circuits, are combined or coupled in different forms and modes than as described above or be substituted or switched with other components or equivalents.

Therefore, other implements, other embodiments, and equivalents to claims are within the scope of the following claims.

## Claims

1. A method for determining face liveness, comprising:
obtaining a first image being an image associated with a face;
generating training data by processing the first image;
training an artificial intelligence model by using the training data;
extracting a feature vector of a second image by inputting the second image associated with a face to the artificial intelligence model;
inputting the feature vector to a fully connected layer; and
outputting a liveness result value about second image through the fully connected layer.

2. The method of claim 1, wherein the fully connected layer includes one or more sub-layers, and
wherein each sub-layer includes a plurality of perceptrons using a weight and a bias.

3. The method of claim 2, wherein the training data include one or more processing images obtained through rotation, enlargement, horizontal movement, vertical movement, tilting, or horizontal flipping of the first image.

4. The method of claim 3, wherein the training data include a first processing image included in one or mor processing images, wherein the first processing image is obtained by rotating the first image as much as 20 degrees.

5. The method of claim 3, wherein the training data include a second processing image included in one or mor processing images, wherein the first processing image is obtained by enlarging the first image as much as 1.15 times.

6. The method of claim 3, wherein the training data include a third processing image included in one or mor processing images, wherein the first processing image is obtained by moving the first image horizontally or vertically as much as a 0.2 ratio.

7. The method of claim 3, wherein the training data include a fourth processing image included in one or mor processing images, wherein the first processing image is obtained by tilting the first image as much as 0.15 degrees.

8. The method of claim 3, wherein the training data include a fifth processing image included in one or mor processing images, wherein the first processing image is obtained by flipping the first image horizontally.

9. The method of claim 2, wherein the outputting of the liveness result value includes:
inputting the feature vector being M-dimensional to a first sub-layer; and
obtaining a first result vector of an N-dimension smaller than the M-dimension through the first sub-layer.

10. The method of claim 9, wherein the first sub-layer includes:
a first perceptron configured to transform a first input value included in the feature vector into a first result value of the first result vector, wherein the first perceptron uses a first weight; and
a second perceptron configured to transform a second input value included in the feature vector into a second result value of the first result vector, wherein the second perceptron uses a second weight different from the first weight.

11. A face liveness determining device comprising:
a processor configured to:
obtain a first image being an image associated with a face;
generate training data by processing the first image;
train an artificial intelligence model by using the training data;
extract a feature vector of a second image by inputting the second image associated with a face to the artificial intelligence model;
input the feature vector to a fully connected layer; and
output a liveness result value associated with the second image through the fully connected layer.
